# EUROPEAN PATENT APPLICATION

(11) **EP 3 910 143 A1**
(43) Date of publication of application: **17.11.2021**
(21) Application number: 20738968.5
(22) Date of filing: 10.01.2020
(51) Int. Cl.: E05D 13/00, E05D 15/06

(54) **DOOR AND WINDOW ROLLER, ROLLER APPARATUS, AND DOOR AND WINDOW**

(30) Priority: 12.01.2019 CN 201910029294
(71) Applicant: Hetuo (Shenzhen) Industrial Design Co., Ltd., Shenzhen, Guangdong 518000 (CN)
(72) Inventor: MA, Haiying, Zaoyang, Hubei 518000 (CN)
(74) Representative: Li, Xiaolu
(86) International application number: PCT/CN2020/071486
(87) International publication number: WO 2020/143783

(57) **Abstract**

A door/window pulley, relating to a field of door/window hardware accessories, which can effectively avoid generating indentation by providing a bearing (1) and an anti-deformation metal ring (2) that can be in contact with a track and using the own rigidity of the anti-deformation metal ring (2), such that the door/window pulley is also difficult to be pressed to cause deformation. Moreover, an inner part of an injection molded body (3) is disposed between the bearing (1) and the anti-deformation metal ring (2), which not only well transfers pressure bore by the anti-deformation metal ring (2) when load-bearing to the bearing (1), but also restores the anti-deformation metal ring (2) after slight deformation by giving an outward elastic support to the anti-deformation metal ring (2) using elasticity of the injection molded body (3). A track groove (31) is disposed on a periphery of the injection molded body (3), and the anti-deformation metal ring (2) is disposed on a bottom of the track groove (31), so that when the door/window pulley moves on the track (5), bearing force directly acts on the anti-deformation metal ring (2), and friction between the door/window pulley and the track (5) occurs between a side wall surface, of the track groove (31) of the injection molded body (3), and the track (5), which effectively reduces generation of noise.

## Description

### TECHNICAL FIELD

The present disclosure relates to a field of door/window hardware accessories, in particular to a door/window pulley, a pulley device, and a door/window.

### BACKGROUND

Doors and windows are basic constituent elements of a building, which are a carrier for lighting, ventilation, anti-theft, viewing, and architectural aesthetics of the building. Push-pull doors/windows are widely used due to advantages of easy installation, flexibly switching, and no extra space is occupied in a switching state, etc.

Door/window pulleys are disposed between a pull-type door /window and a door/window frame to reduce resistance and facilitate pushing. Conventional door/window pulleys have two types of plastic pulleys and metal pulleys. Each of the plastic pulleys is composed of a bearing and a plastic outer ring wrapped outside the bearing, so that bearing performance of the plastic pulleys is poor, especially in a long-time static load-bearing case, where the plastic outer ring is easily pressed and integrally deformed or generates partial indentation, thereby causing sliding of the door/window to seize up, jump, and sound abnormal. Each of the metal pulleys is composed of a bearing and a metal outer ring outside the bearing, although the metal pulleys are not easy to generate the indentation, the metal pulley cannot be restored after whole deformation, which has a high cost, and friction noise between the metal outer ring and a track of the door/window frame in a moving process is large.

### SUMMARY

The present disclosure aims to provide a door/window pulley to solve the defects that a present plastic pulley is easily pressed and integrally deformed or generates partial indentation, and a present metal pulley is high in cost, unrecoverable after deformation, and large in noise, etc.

A technical solution adopted by the present disclosure to solve the technical problem is to provide a door/window pulley, including a bearing, an anti-deformation metal ring; and an injection molded body. An inner part of the injection molded body is disposed between the bearing and the anti-deformation metal ring, a track groove is disposed on a periphery of the injection molded body; and the anti-deformation metal ring is disposed on a bottom of the track groove.

Optionally, the anti-deformation metal ring is embedded in the injection molded body, and a periphery of the anti-deformation metal ring is covered with the injection molded body or provided with a plastic layer.

Optionally, a clamping structure is disposed between the periphery of the anti-deformation metal ring and the injection molded body covered on the periphery of the anti-deformation metal ring or the plastic layer provided on the periphery of the anti-deformation metal ring.

Optionally, the anti-deformation metal ring is partially embedded in the injection molded body, a groove in transition with the track groove is disposed on an outer surface, exposed to the track groove, of the anti-deformation metal ring.

Optionally, axial extension parts are disposed at two ends, embedded in the injection molded body, of the anti-deformation metal ring.

Optionally, a respective hook part extending in a side wall direction of the track groove is disposed on each of the axial extension parts of the anti-deformation metal ring.

Optionally, an inner wall surface of the anti-deformation metal ring is an annular upright surface.

Optionally, the injection molded body includes a first injection molded body and a second injection molded body. The first injection molded body is disposed between the bearing and the anti-deformation metal ring, and at least one notch is disposed on the first injection molded body. The second injection molded body is internally connected with the bearing and fills the at least one notch disposed on the first injection molded body, and the track groove is disposed on a periphery of the second injection molded body.

Optionally, the first injection molded body includes a ring portion connected to an outer side of the bearing and at least two protrusions integrally formed with the ring portion and connected to an inner side of the anti-deformation metal ring, and the notch is formed between adjacent protrusions.

Optionally, the protrusions are disposed as three and are uniformly distributed along the ring portion.

Optionally, another technical solution adopted by the present disclosure to solve the technical problem is to provide a pulley device, including a mounting base and the door/window pulley. The door/window pulley is disposed on the mounting base.

Optionally, another technical solution adopted by the present disclosure to solve the technical problem is to provide a door/window, including a door/window sash, a door/window frame, and the door/window pulley. A track is disposed on the door/window frame. The door/window pulley is disposed on the door/window sash and is clamped on the track by the track groove, and a top end of the track abuts against the anti-deformation metal ring.

Beneficial effects of the present disclosure are as follows.

The present disclosure provides the bearing and the anti-deformation metal ring that can be in contact with the track, the anti-deformation metal ring uses its own rigidity to effectively avoid generating indentation, and the door/window pulley is also difficult to be pressed to cause deformation. Moreover, the inner part of the injection molded body is disposed between the bearing and the anti-deformation metal ring, which not only well transfers pressure borne by the anti-deformation metal ring when load-bearing to the bearing, but also restores the anti-deformation metal ring after slight deformation by giving an outward elastic support to the anti-deformation metal ring using elasticity of the injection molded body, so that the anti-deformation metal ring still smoothly slides without generating jumping and abnormal sounds even in long-time static load-bearing cases. The track groove is disposed on the periphery of the injection molded body, and the anti-deformation metal ring is disposed on the bottom of the track groove, so that when the door/window pulley moves on the track, bearing force directly acts on the anti-deformation metal ring, and friction between the door/window pulley and the track occurs between a side wall surface, of the track groove of the injection molded body, and the track, which effectively reduces generation of noise.

### BRIEF DESCRIPTION OF DRAWINGS

The present disclosure is further described hereinafter in conjunction with the accompanying drawings and examples, in which:
FIG. 1 is a plane structural schematic diagram of a door/window pulley according to one embodiment of the present disclosure.
FIG. 2 is a structural schematic diagram of the door/window pulley shown in another angle according to one embodiment of the present disclosure.
FIG. 3 is a longitudinal cross-sectional structural schematic diagram of the door/window pulley having an integral injection molded body according to one embodiment of the present disclosure.
FIG. 4 is a partial cross-sectional structural schematic diagram of the door/window pulley where the injection molded body is covered on a periphery of an anti-deformation metal ring according to one embodiment of the present disclosure.
FIG. 5 is a structural schematic diagram of a clamping structure disposed between the periphery of the anti-deformation metal ring and the injection molded body covered on the periphery of the anti-deformation metal ring or a plastic layer provided on the periphery of the anti-deformation metal ring according to one embodiment of the present disclosure.
FIG. 6 is a transverse cross-sectional structural schematic diagram of the door/window pulley according to one embodiment of the present disclosure.
FIG. 7 is a partial enlarged structural schematic diagram of portion C shown in FIG. 4.
FIG. 8 is a cross-sectional structural schematic diagram of the anti-deformation metal ring of the door/window pulley according to one embodiment of the present disclosure.
FIG. 9 is a longitudinal cross-sectional structural schematic diagram of the door/window pulley having a first injection molded body and a second injection molded body according to one embodiment of the present disclosure.
FIG. 10 is an exploded structural schematic diagram of the door/window pulley according to one embodiment of the present disclosure.
FIG. 11 is a three-dimensional schematic diagram of the second injection molded body according to one embodiment of the present disclosure.
FIG. 12 is a three-dimensional schematic diagram of the first injection molded body according to one embodiment of the present disclosure.
FIG. 13 is a three-dimensional schematic diagram of a pulley device according to one embodiment of the present disclosure.

### DETAILED DESCRIPTION

The preferred embodiment of the present disclosure is now described in detail in conjunction with the accompanying drawings.

### Embodiment one

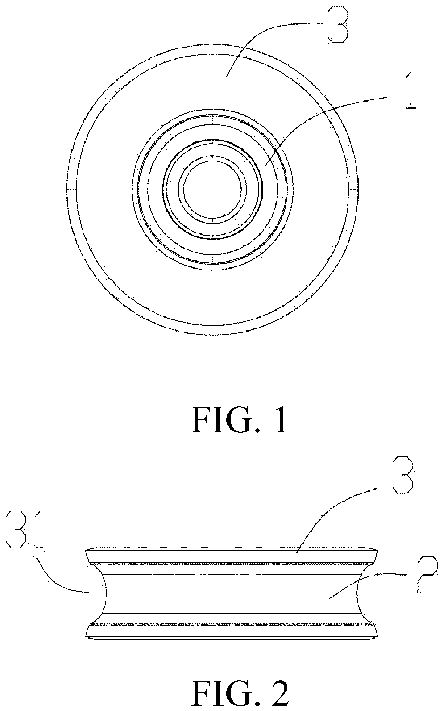

As shown in FIGS. 1-6, the present disclosure provides a door/window pulley, including a bearing 1, an anti-deformation metal ring 2, and an injection molded body 3. An inner part of the injection molded body 3 is disposed between the bearing 1 and the anti-deformation metal ring 2, a track groove 31 is disposed on a periphery of the injection molded body 3. The anti-deformation metal ring 2 is disposed on a bottom of the track groove 31. The injection molded body 3 can be injection molded one time and can also be injection molded multiple times. The injection molded body 3 injection molded one time forms a whole body, and the injection molded body 3 injection molded multiple times is composed of a plurality of sub-injection molded bodies 3. The bearing 1 may be a rolling bearing, an oil bearing, etc. The present disclosure provides the bearing 1 and the anti-deformation metal ring 2, the anti-deformation metal ring 2 use its own rigidity to effectively avoid generating indentation, and the door/window pulley is also difficult to be pressed to cause deformation. Moreover, the inner part of the injection molded body 3 is disposed between the bearing 1 and the anti-deformation metal ring 2, which not only well transfers pressure borne by the anti-deformation metal ring 2 when load-bearing to the bearing 1, but also restores the anti-deformation metal ring 2 after slight deformation by giving an outward elastic support to the anti-deformation metal ring 2 using elasticity and cushioning effect of the injection molded body 3, so that the anti-deformation metal ring 2 still smoothly slides without generating jumping and abnormal sounds even in long-time static load-bearing cases. A track groove 31 is disposed on the periphery of the injection molded body 3, and the anti-deformation metal ring 2 is disposed on the bottom of the track groove 31, so that when the door/window pulley moves on a track 5, bearing force directly acts on the anti-deformation metal ring 2, and friction between the door/window pulley and the track 5 occurs between a side wall surface, of the track groove 31 of the injection molded body 3, and the track 5, which effectively reduces generation of noise.

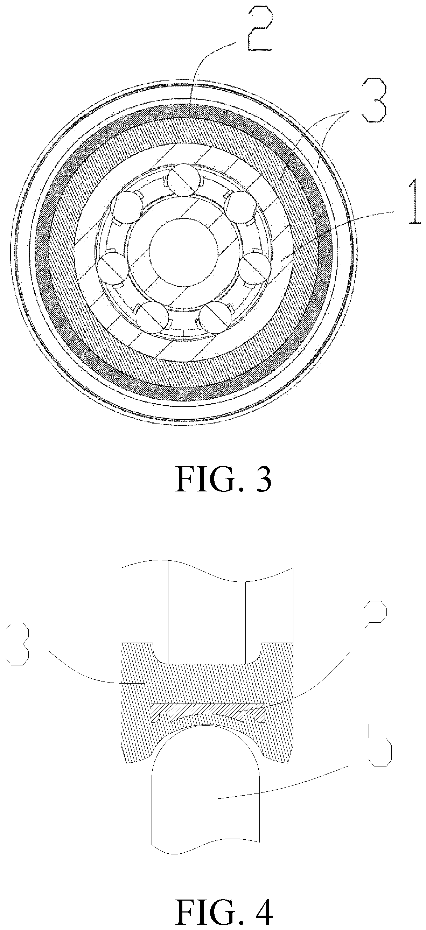

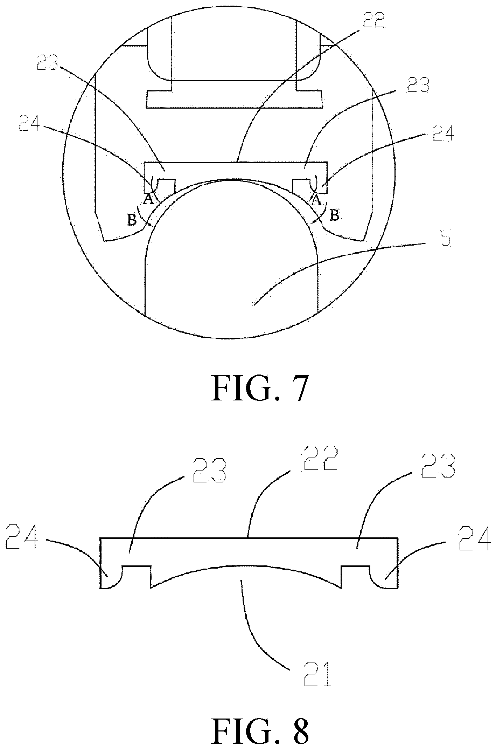

As shown in FIGS.3-8, the anti-deformation metal ring 2 is embedded in the injection molded body 3, and a periphery of the anti-deformation metal ring 2 is covered with the injection molded body 3 or provided with a plastic layer. A clamping structure 25 is disposed between the periphery of the anti-deformation metal ring 2 and the injection molded body 3 covered on the periphery of the anti-deformation metal ring 2 or the plastic layer provided on the periphery of the anti-deformation metal ring 2. The clamping structure 25 enables the anti-deformation metal ring 2 to be directly and more tightly combined with the injection molded body 3, and the clamping structure 25 is preferably a concave-convex clamping structure. After the anti-deformation metal ring 2 is covered with the injection molded body 3 and the plastic layer, wear of a track of a door/window in contact therewith is effectively avoided. Certainly, the anti-deformation metal ring 2 may also be partially embedded in the injection molded body 3, and an outer periphery of the anti-deformation metal ring 3 is exposed to the track groove 31, and a groove 21 in transition with the track groove 31 is disposed on an outer surface, exposed to the track groove 31, of the anti-deformation metal ring 2. An inner wall surface 22 of the anti-deformation metal ring 2 is an annular upright surface, and the design of the upright surface better shares load borne by the anti-deformation metal ring 20, which improves load bearing capacity of the door/window pulley, stability of the door/window pulley, so that use experience and a service life are higher. Axial extension parts 23 are disposed at two ends, embedded in the injection molded body 3, of the anti-deformation metal ring 2. Metal parts may be bowed when being partially pressed. After the axial extension parts 23 are disposed at the two ends, embedded in the injection molded body 3, of the anti-deformation metal ring 2, and when the groove 21 of the anti-deformation metal ring 2 is pressed by the track 5 to be bowed, the axial extension parts 23 deflect towards a direction of the track 5 (a direction indicated by arrow A in FIG. 7 represents a deflection direction of the axial extension parts 23), so that wall surfaces on both sides of the track groove 31 of the injection molded body 3 are pressed to move towards the track 5 and contact a surface of the track 5 (a direction indicated by arrow B in FIG. 7 represents a deflection direction of the axial extension parts 23). Meanwhile, when the door/window pulley moves on the track 5, bearing force directly acts on the anti-deformation metal ring 2, the wall surfaces on the both sides of the track groove 31 contact the surface of the track, which not only prevents the door/window pulley from swinging when moving, but also makes the friction (especially sliding friction which is occurred when the track groove 31 is clamped into the track 5) between the door/window pulley and the track 5 only occurred between the side wall surface, of the track groove 31 of the injection molded body 3, and the track 5, so that the generation of the noise is effectively reduced. In order to prevent a side wall of the track groove 31 of the injection molded body 3 from pressing to be deformed by the track 5, a respective hook part 24 extending in a side wall direction of the track groove 31 is disposed on each of the axial extension parts 23 of the anti-deformation metal ring 2. The respective hook portion 24 is configured to form a framework in the side wall of the track groove 31 of the injection molded body 3, when the track 5 squeezes the side wall of the track groove 31, the respective hook portion 24 decomposes and bears pressure from the track 51, so that the side wall of the track groove 31 is effectively prevented from being overturned, deformed, or broken.

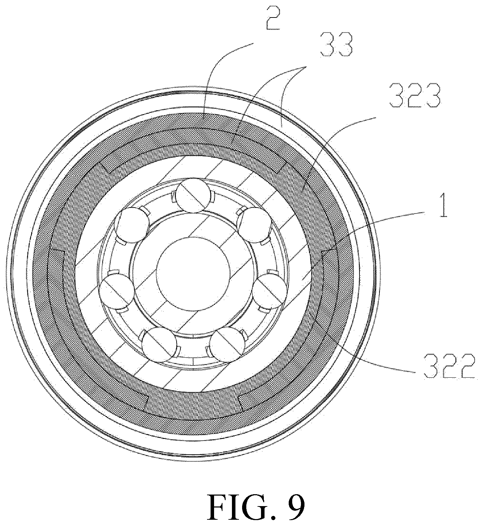

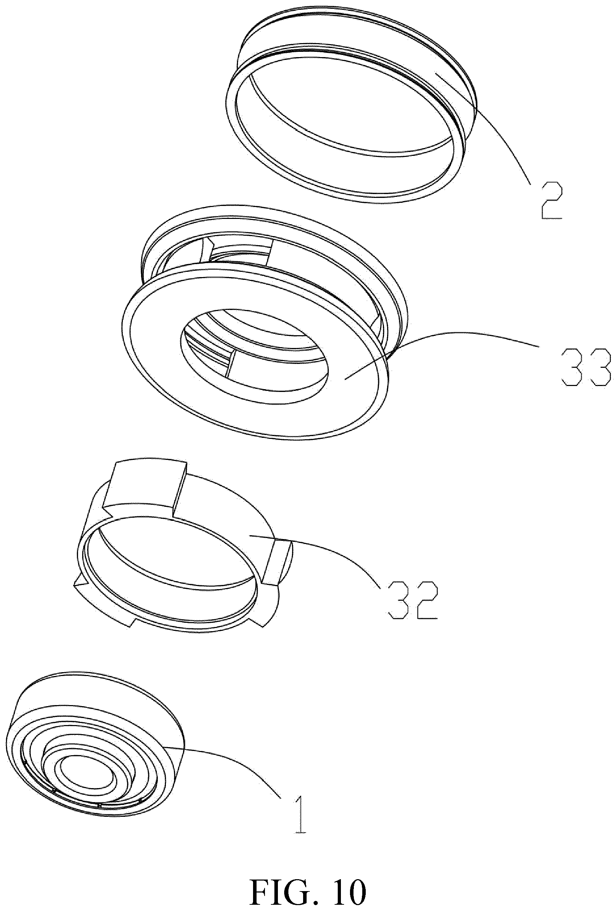

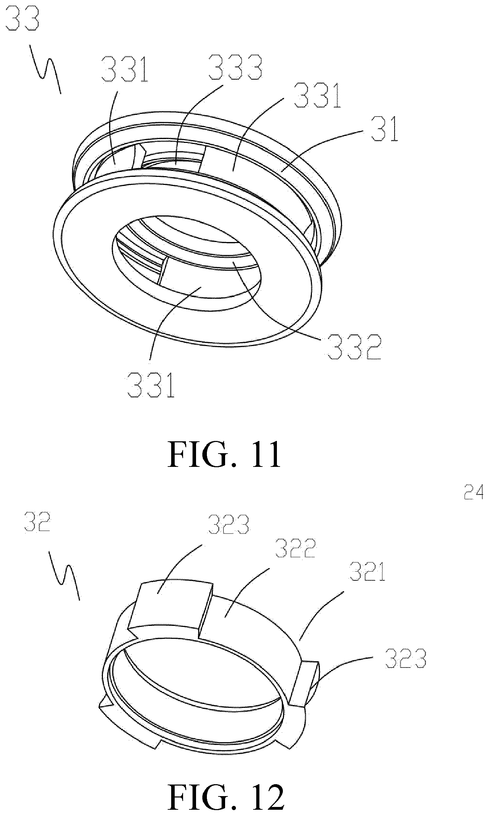

As shown in FIGS. 9-11, in order to ensure integrity of an appearance of the door/window pulley and the concentricity of the bearing 1 and the anti-deformation metal ring 2, the injection molded body 3 includes a first injection molded body 32 and a second injection molded body 33. The first injection molded body 32 is disposed between the bearing 1 and the anti-deformation metal ring 2, and at least one notch 321 is disposed on the first injection molded body 3. The second injection molded body 33 is internally connected with the bearing 1 and fills the at least one notch 321 disposed on the first inj ection molded body 32, and the track groove 31 is disposed on a periphery of the second injection molded body 33. Furthermore, the first injection molded body 32 includes a ring portion 322 connected to an outer side of the bearing 1 and at least two protrusions 323 integrally formed with the ring portion 322 and connected to an inner side of the anti-deformation metal ring 2, and the least one notch 321 is formed between adjacent protrusions 323. Optionally, the protrusions 323 are disposed as three and are uniformly distributed along the ring portion 322., and three notches 321 are respectively formed between each two of the adjacent three protrusions 323. Three filling portions 331 matched with the notches 321 and an upper and down opposite annular clamping groove 332 are formed in the second injection molding body 33. The annular clamping groove 332 clamps the two end edge positions of the bearing 1. The adjacent filling portions 331 form a respective hole position 333 for each of the protruding portions 323 to pass through, and each of the protruding portions 323 is connected to the inner wall surface of the anti-deformation metal ring 2 after passing through the respective hole position 333. When processing the door/window pulley, fixing the bearing 1 and the anti-deformation metal ring 2 by a mould, and confirming whether the bearing 1 and the anti-deformation metal 2 are concentric, and then forming the first injection molded body by first injection molding; the notches 321 on the first injection molded body 32 is a channel for melting and injecting plastic melted during the second injection molding; after molding the first injection molding body 32, a relative position between the bearing 1 and the anti-deformation metal ring 2 is fixed (concentricity is guaranteed), and then forming the second injection molded body 33 by the second injection molding. Optionally, the second injection molded body 33 is externally covered with the first injection molded body 32, and an interior of the second injection molded body 33 is directly connected to the bearing 1 (preferably connected to the two end edge positions of the bearing 1) and further fills the notches 321, so that appearance integrity of the door/window pulley is high, and the interior of the second injection molded body 33 enables the bearing 1, the first injection molded body 32, the second injection molded body 33, and the anti-deformation metal ring 2 form a compact and firm overall structure.

### Embodiment two

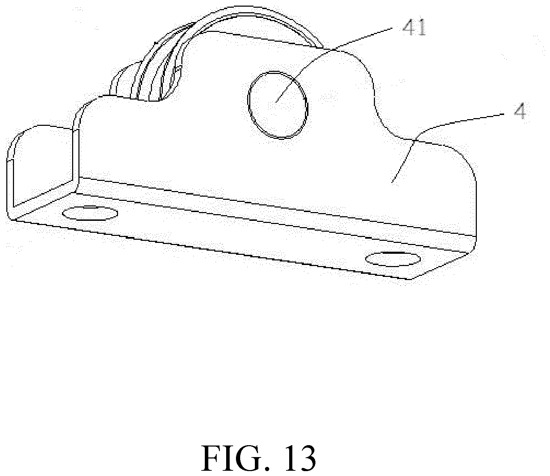

As shown in FIG. 13, the present disclosure provides a door/window pulley device, including a mounting base 4 and the door/window pulley according to embodiment one. The door/window pulley is disposed on the mounting base 4. Specifically, the door/window pulley is disposed on the mounting base 4 by the bearing 1 where a rotating shaft 41 of the bearing 1 passes through the door/window pulley.

### Embodiment three

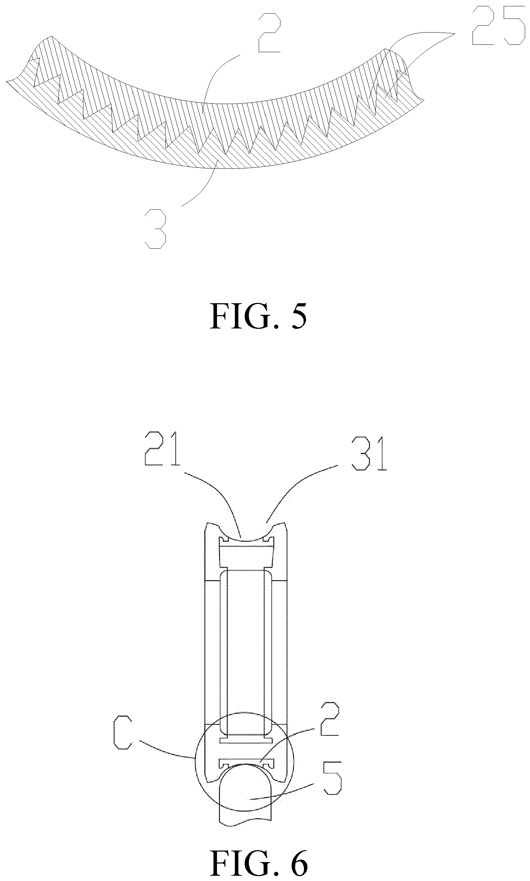

As shown in FIGS. 4 and 6, the present disclosure provides a door/window, including a door/window sash, a door/window frame, and the door/window pulley according to embodiment one. The track 5 is disposed on the door/window frame. The door/window pulley is disposed on the door/window sash and is clamped on the track 5 by the track groove 31, and a top end of the track 5 abuts against the anti-deformation metal ring 2.

It should be understood that the above embodiments are only used to illustrate the technical solution of the present disclosure and not to limit the present disclosure. To those who skilled in the art, the technical solution recorded in the above embodiments can be modified, or some of the technical features can be replaced in an equivalent manner, and all such modifications and replacements shall fall within scopes of protection of the claims appended to the present disclosure.

## Claims

1. A door/window pulley, comprising:
a bearing;
an anti-deformation metal ring; and
an injection molded body;
wherein an inner part of the injection molded body is disposed between the bearing and the anti-deformation metal ring, a track groove is disposed on a periphery of the injection molded body; and the anti-deformation metal ring is disposed on a bottom of the track groove.

2. The door/window pulley according to claim 1, wherein the anti-deformation metal ring is embedded in the injection molded body, and a periphery of the anti-deformation metal ring is covered with the injection molded body or provided with a plastic layer.

3. The door/window pulley according to claim 2, wherein a clamping structure is disposed between the periphery of the anti-deformation metal ring and the injection molded body covered on the periphery of the anti-deformation metal ring or the plastic layer provided on the periphery of the anti-deformation metal ring.

4. The door/window pulley according to claim 1, wherein the anti-deformation metal ring is partially embedded in the injection molded body, a groove in transition with the track groove is disposed on an outer surface, exposed to the track groove, of the anti-deformation metal ring.

5. The door/window pulley according to claim 4, wherein axial extension parts are disposed at two ends, embedded in the injection molded body, of the anti-deformation metal ring.

6. The door/window pulley according to claim 5, wherein a respective hook part extending in a side wall direction of the track groove is disposed on each of the axial extension parts of the anti-deformation metal ring.

7. The door/window pulley according to claims 1-6, wherein an inner wall surface of the anti-deformation metal ring is an annular upright surface.

8. The door/window pulley according to claims 1-6, wherein the injection molded body comprises a first injection molded body and a second injection molded body; the first injection molded body is disposed between the bearing and the anti-deformation metal ring, and at least one notch is disposed on the first injection molded body; the second injection molded body is internally connected with the bearing and fills the at least one notch disposed on the first injection molded body, and the track groove is disposed on a periphery of the second injection molded body.

9. The door/window pulley according to claim 8, wherein the first injection molded body comprises a ring portion connected to an outer side of the bearing and at least two protrusions integrally formed with the ring portion and connected to an inner side of the anti-deformation metal ring, and the at least one notch is formed between adjacent protrusions.

10. The door/window pulley according to claim 9, wherein the protrusions are disposed as three and are uniformly distributed along the ring portion.

11. A pulley device, comprising:
a mounting base; and
the door/window pulley according to claims 1-10;
wherein the door/window pulley is disposed on the mounting base.

12. A door/window, comprising:
a door/window sash;
a door/window frame; and
the door/window pulley according to claims 1-10;
wherein a track is disposed on the door/window frame; the door/window pulley is disposed on the door/window sash and is clamped on the track by the track groove; and a top end of the track abuts against the anti-deformation metal ring.
